# EUROPÄISCHE PATENTSCHRIFT

(11) **EP 1 827 913 B1**
(45) Veröffentlichungstag und Bekanntmachung des Hinweises auf die Patenterteilung: **16.04.2008**
(21) Anmeldenummer: 04804238.6
(22) Anmeldetag: 22.12.2004
(51) Int. Cl.: B60R 21/013, B60R 21/34

(54) **VERFAHREN ZUM ANSTEUERN EINES SICHERHEITSSYSTEMS IN EINEM FAHRZEUG**
METHOD FOR CONTROLLING A SAFETY SYSTEM IN A VEHICLE
PROCEDE D'AMORÇAGE D'UN SYSTEME DE SECURITE DANS UN VEHICULE

(43) Veröffentlichungstag der Anmeldung: 05.09.2007
(73) Patentinhaber: Bayerische Motoren Werke Aktiengesellschaft, 80809 München (DE)
(72) Erfinder: BAUR, Richard, 85276 Pfaffenhofen (DE); LU, Yan, 85356 Freising (DE); NEUBERGER, Ralph, 80797 München (DE)
(86) Internationale Anmeldenummer: PCT/EP2004/014644
(87) Internationale Veröffentlichungsnummer: WO 2006/074672

(56) Entgegenhaltungen:
- WO-A-03/059696
- DE-A1- 10 012 434
- DE-A1- 10 034 524
- DE-A1- 10 206 351
- DE-A1- 10 309 227
- DE-A1- 19 855 452
- US-A- 5 790 404
- US-B1- 6 329 910

## Beschreibung

Die vorliegende Erfindung betrifft ein Verfahren zum Ansteuern eines Sicherheitssystems in einem Fahrzeug und eine Ansteuervorrichtung.

Aus dem Stand der Technik sind zahlreiche Verfahren und Vorrichtungen der genannten Art bekannt, die überwiegend nur auf den Schutz der Insassen eines Kraftfahrzeugs unter Verwendung mindestens eines Aufprallsensors abzielen. Dementsprechend wird auch eine Analyse eines Unfallsgeschehens in der Regel nur unter dem Gesichtspunkt einer rechtzeitigen Aktivierung bekannter Insassen- Schutzeinrichtungen mit dem Ziel einer effektiven Dämpfung eines Insassenaufpralls betrieben, der aus einer aufprall- oder unfallbedingten Geschwindigkeitsänderung des Kraftfahrzeugs resultiert. Auslösestrategien werden also nach dem Stand der Technik regelmäßig auf der Basis gemessener und/oder errechneter Beschleunigungsvektoren ausgewählt und umgesetzt, um durch gezielte Auswahl gerichtet wirkender Insassen-Schutzeinrichtungen starke Einbußen in der Schutzleistung für den oder die Insassen durch zu frühe als auch zu späte Aktivierung der entsprechenden Airbags, Gurtstraffer und/oder Überroll-Schutzvorrichtungen etc. zu vermeiden. Neben zeitsynchronisierten Laufzeitmessungen unfallrelevanter Signale sind hierzu auch Ansätze unter Verwendung einer Vielzahl von verteilt angeordneten Signalgebern oder Sensoren zur Schadensortung und zeitlichen Verfolgung einer Schadensentwicklung bekannt geworden.

Aus der DE 102 06 351 A1, als nächstliegenden Stand der Technik betrachtet, ist beispielsweise ein Verfahren zum Ansteuern eines Sicherheitssystems in einem Fahrzeug bekannt, bei dem ein Ausgangssignal mindestens eines Aufprallsensors in einer Auswerteeinheit einer Frequenzanalyse unterzogen wird.

Zum weiteren technischen Hintergrund wird beispielsweise auf die DE 103 09 227 A1, die US 6,329,910, die US 5,790,404, die WO 03/059 696, die DE 100 12 434 A1, die DE 100 34 524 A1 und die DE 198 55 452 A1 hingewiesen.

Ausgangspunkt dieser Diagnosen mit nachgeschalteten Auslösestrategien bestimmter Komponenten von komplexen Schutzeinrichtungen ist dabei stets ein Aufprall mit Verformungen, die mindestens eine Fahrzeug-Außenhaut betreffen, wie beispielsweise in der US 5,445,412 für ein Kraftfahrzeug und in der DE 40 25 564 C1 für Verbundfaserwerkstoffteile eines Flugzeugs offenbart. Es sind hierbei auch Verfahren bekannt, bei denen ein Ausgangssignal mindestens eines Sensors einer Frequenzanalyse unterzogen wird, wie z.B. gemäß der Lehre der DE 198 55 452 A1. Die durch einen Aufprall in Abhängigkeit von einem Aufprall-Ort hervorgerufenen Spektren wirken sich aufgrund der verschiedenen Karosserie-Strukturen zwischen Fahrzeugfront und Fahrzeugseite unterschiedlich aus. Diese Eigenschaft kann zur Lokalisation eines Aufprall-Ortes genutzt werden. Eine Freigabe von Schutzmaßnahmen erfolgt dann zielgerichtet ab einer vorgegebenen Unfallschwere, die sich aus einer Fläche einer Einhüllenden des zeitlichen Verlaufs des Sensorsignals ergibt. Gemäß der DE 100 34 524 A1 wird wiederholt ein definierter Frequenzimpuls als Anregung ausgesandt, wobei signifikante Änderungen von einem bekannten Spektrum als eine unfallbedingte Verformung des Bauteils oder der überwachten Bauteile des Fahrzeugs interpretiert werden. Schließlich offenbart die DE 100 12 434 A1, aufbauend auf der Verwendung einer zeitlich gefensterten Fast Fourier-Transformation zur spektralen Untersuchung und Bewertung einer Relevanz eines Sensor-Störsignals für Fahrzeuginsassen, eine Frequenzanalyse des Sensorsignals mittels einer Wavelet-Transformation. Eine Wavelet-Transformation gibt gegenüber einer Fast Fourier-Transformation auch Aufschluss über ein zeitliches Auftreten einzelner Frequenzen oder Frequenzbereiche.

Aus der DE 102 57 125 A1 geht eine mögliche Ausgestaltung eines Sensors in Form einer piezoelektrischen Folie zur Erfassung eines Fußgängeraufpralls hervor.

Verfahren, die als Frühwarnsysteme auch eine Schutzmöglichkeit für Fußgänger und/oder Zweiradfahrer bieten, lassen sich auf der Basis der vorstehend dargestellten Verfahren und Vorrichtungen nur mit sehr großen Einschränkungen hinsichtlich einer maximal erreichbaren Schutzwirkung aufbauen. Gemäß der Lehre der DE 102 06 351 A1 dient ein Sensor in einem besonders kollisionsgefährdeten Bereich eines Fahrzeugs, um eine mögliche Kollision aufgrund einer ersten physischen Berührung des Fahrzeugs mit dem Objekt als impulsartige Anregung zu erfassen. Eine spektrale Verteilung des Sensorsignals mit den zugehörigen Amplituden über der Zeit, die auf der Grundlage einer Fast Fourier-Transformation ermittelt wird, kann demgemäß genutzt werden, um zwischen einer Kollision mit einem Menschen oder einem sonstigen Objekt zu unterscheiden. Auch dieses bekannte Verfahren ist im Bezug auf ein Fortschreiten oder einen Verlauf eines auf das betreffende Fahrzeug einwirkenden Stoßes prinzipiell nicht schnell genug und kann hinsichtlich seiner Robustheit gegenüber anhaftende Verschmutzungen, Eisschichten, Schneeanhaftungen und/oder Schotter-Schlag erhebliche Defizite aufweisen.

Aufgabe der vorliegenden Erfindung ist es daher, ein hinsichtlich seiner Zuverlässigkeit verbessertes Verfahren zur Ansteuerung eines auf Fußgänger und/oder Zweiradfahrer wirksamen Sicherheitssystems in einem Fahrzeug zu schaffen.

Diese Aufgabe wird erfindungsgemäß durch die Merkmale der jeweiligen unabhängigen Patentansprüche gelöst. Vorteilhafte Weiterbildungen der Erfindung sind die Gegenstände der abhängigen Patentansprüche.

Bei dem erfindungsgemäßen Verfahren zum Ansteuern eines Sicherheitssystems in einem Fahrzeug, bei dem ein Ausgangssignal mindestens eines Aufprallsensors in einer Auswerteeinheit, die in einem elektronischen Steuergerät integriert ist, einer Frequenzanalyse unterzogen wird, wird die Frequenzanalyse in mindestens einem vorgegebenen Frequenzbereich durchgeführt. Das Spektrum des Ausgangssignals wird mit Referenzmustern verglichen. Dabei wird die Abhängigkeit des Spektrums von der aktuellen Fahrzeuggeschwindigkeit und/oder von der aktuellen Fahrzeug-Außentemperatur berücksichtigt. Vom Steuergerät wird ein Ansteuersignal zum Auslösen von vorgesehenen Schutzmaßnahmen ausgegeben, wenn ein Aufprall einer zu schützenden Person (insbesondere Fußgänger und/oder Zweiradfahrer) zumindest mit einer vorgegebenen Wahrscheinlichkeit erkannt wird.

Der aktuellen Fahrzeuggeschwindigkeit v sowie der Fahrzeug- Außentemperatur ϑ wird ein besonderer Stellenwert eingeräumt. In beiden Fällen handelt es sich um leicht messbare und im Fahrzeug auch für andere elektronische Steuergeräte üblicherweise ohnehin erfasste Größen. Die Fahrzeuggeschwindigkeit v wird gemäß dem erfindungsgemäßen Verfahren berücksichtigt, da sich ein überraschender Einfluss auf das Spektrum von Sensorsignalen gerade bei Aufprall von hart auf weich und weich auf weich herausgestellt hat. Weiterhin wurde erkannt, dass mit sinkender Fahrzeug- Außentemperatur ϑ insbesondere die Elastizität von Fahrzeugelementen herabgesetzt wird, so dass ein bei Normbedingungen weiches Material bei Temperaturabnahme fortschreitend wie ein härteres Material reagiert. Dies gilt insbesondere für eine bei Normaltemperaturen relative weiche Außenausrüstung eines Stoßfängers. Eine Berücksichtigung mindestens eines dieser Parameter erhöht die Aussagesicherheit eines erfindungsgemäßen Verfahrens also deutlich.

In einer Weiterbildung der Erfindung werden piezoelektrische Elemente als Sensoren verwendet. Unter dem Begriff der Piezoelektrizität versteht man die Eigenschaft einiger Kristallstrukturen, dass sie unter Einwirkung von Zug und Druck an ihren Oberflächen eine Ladungstrennung mit der Folge hervorrufen, dass eine elektrische Spannung über Elektroden abgreifbar ist. Bei angepasster Materialauswahl und entsprechender Formgebung der piezoelektrischen Kristalle können über einen weiteren Frequenzbereich hinweg Oberflächenverformung und Körperschalleffekte über die damit verbundenen mechanischen Verformungen eins Piezo-Sensorelementes in elektrische Signale umgewandelt werden. Neben der Verwendung piezoelektrischer Kristalle, die z.B. als Blei-Zirkonium-Titanat- bzw. PZT-Körper auch als keramische Elemente ausgeführt sein können, ist der Einsatz piezoelektrischer Kunststoff-Folien bekannt geworden. Bei den verwendeten Kunststoffen handelt es sich in der Regel um stark polare Substanzen, die bei der Herstellung einer Folie im erwärmten Zustand einem starken statischen elektrischen Feld zur einheitlichen Ausrichtung der Moleküle unterworfen werden. Im Zuge der Abkühlung ist diese erzwungene Ausrichtung der Moleküle in dem Folienkörper quasi fest eingefroren.

Den vorstehend genannten Materialien ist gemein, dass sie als passive Sensoren eingesetzt werden können, wobei in einfacher Weise unter Ausnutzung der Reziprozität piezo-elektrischer Materialien mit externer aktiver Ansteuerung und nachfolgender Auswertung durch eine zentrale Systemeinheit auch ein Selbsttest möglich ist. Hierzu wird also das Sensor-Element erst als Aktuator angesteuert, wobei die so angeregte mechanische Schwingung wiederum als elektrisches Signal sensiert werden kann, sofern das Element störungsfrei arbeitet. Diese Sensierung kann durch den gerade als Aktuator betriebenen Sensor, wie durch mindestens einen benachbart angeordneten Sensor vorgenommen werden. Durch diese Möglichkeit kann jeder Sensor eines Sensorfeldes also ohne zusätzlichen apparativen Aufwand an Signalgebern etc. jederzeit überprüft und hinsichtlich seiner Betriebseigenschaften überwacht werden.

Neben den Selbsttests eines jeweiligen Sensors kann jedoch durch den Aktuatorbetrieb einem zu sichernden oder zu überwachenden System auch eine mechanische Schwingung aufgezwungen werden, wobei durch das gleiche Element nachfolgend eine Analyse der angeregten Schwingung mit Untersuchung der Eigenschaften dieser Systemantwort in einer Auswerteeinheit des eigentlichen Sicherheitssystems versorgt werden kann. Neben Verformungen des Materials können so auch Risse und weitere Störungen, insbesondere durch ein abweichendes Frequenzmuster dieser Systemantwort detektiert werden. Somit bildet ein vorgeschlagenes Verfahren zum Betreiben eines Sensors mit reziprokem Wirkungsmechanismus in einem Sicherheitssystem die Vorteile eines zuverlässigen Selbsttestes sowie den Vorteil einer mit geringem Aufwand und vernachlässigbarem Störungseinfluss versehenen Sicherheitsüberprüfung und Systemanalyse in einem zu überwachenden mechanischen Gesamtsystem mit einer Diagnose zum Abschluss einer jeden Überprüfung. Vorschädigungen bestimmter Teile innerhalb eines Kraftfahrzeugs können damit jederzeit detektiert und bei der Analyse eines möglicherweise aktuell ablaufenden Unfallgeschehens mit berücksichtigt werden, da jede Art von Vorschädigung entweder eine Erweichung von Teilen des Chassis oder eine Aufsteifung, in jedem Fall jedoch eine Abweichung von einem unbeeinträchtigten Normalverhalten bewirkt.

In einer vorteilhaften Weiterbildung der Erfindung umfasst ein Sicherheitssystem eine Vielzahl von Sensoren, die über eine zu sichernde Struktur als Beobachtungsbereich verteilt angeordnet sind. Die zu beobachtende mechanische Struktur, wie beispielsweise ein Stoßfänger oder eine Stoßstange, kann auch in gewissem Sinne mit einem Netz von Sensoren überzogen werden, wobei die Anordnungsform einer jeweiligen Eigenart der mechanischen Struktur sowie einer Lokalisation von Häufungspunkten möglicher Unfall-Kontakte mit Fußgängern und/oder Zweiradfahrern durch die Verteilungsart und Verteilungsdichte der Sensoren Rechnung trägt. Weitere Einsatzorte an einem Kraftfahrzeug können beispielsweise auch Zierleisten sein, die insbesondere im Bereich der Fahrzeug-Türen angeordnet sind. Auch in dieser Anordnung ist für jeden einzelnen der Sensoren weiterhin ein Selbsttest über eine Auswertung eines jeweiligen Ausschwingverhaltens nach aktiver Test-Anregung mittels eines vordefinierten Testsignals und eines aufgenommenen Messsignals in der vorstehend dargestellten Weise möglich. Zudem existiert nun auch die Möglichkeit, durch das aktive Anregen über einen Sensor und die Auswertung der von allen Sensoren eingehenden Messsignale eine flächendeckende Auswertung zur Fehler- und/oder Störungsanalyse vorzunehmen. Alle Sensoren können gleichartig aufgebaut und fixiert sein, also einer Sensor-Baureihe bzw. einem Typ angehören.

Eine Platzierung der Sensoren mit dauerhaft zuverlässiger Befestigung kann dabei einzeln oder in Form vorgefertigter Baugruppen jederzeit auch nachträglich durch Einbettung, Aufkleben, Anschrauben o.ä. an bestimmten Stellen vorgenommen werden. Zum Aufbau eines erfindungsgemäßen Systems eignen sich hierzu besonders Stoßfänger oder Stoßstangen, Zierleisten u.a. in Türbereichen, Dachbereiche und eine Motor- und/oder Kofferraumhaube an einem Kraftfahrzeug.

Im Fall des Auftretens nicht harmonischer Schwingungen, wie sie beispielsweise durch einen Aufprall mit einem Fremdobjekt oder einem Fußgänger etc. auftreten, ist eine präzise Erkennung eines jeweiligen Ereignisses sowie eine Ortung über die jeweiligen Sensorelemente möglich. Hierzu wird vor allem eine Intensitätsauswertung der jeweiligen Ausgangssignale durchgeführt, die mit einer Laufzeitmessung gekoppelt sein kann. In einer Zusammenschau ergibt sich so schnell ein zuverlässiges Bild eines Aufpralls mit einem Rückschluss auf den Ort oder die Orte des Aufpralls und die Art des aufgeprallten Objektes bzw. Menschen.

Geeignete Gegen- bzw. Schutzmaßnahmen können dann gezielt durch Subsysteme ausgelöst werden, die dem Sicherheitssystem als Gesamtheit nachgeschaltet sind. Insbesondere betrifft das ein zielgerichtetes und genau definiertes Auslösen von Außen-Airbags im Bereich der Fahrzeugfront, der Scheibenwischer-Antriebe und/oder im Dachbereich nahe einer Regenrinne und/oder einer Dachreling. Wahlweise kommt auch ein Anstellen der Motorhaube zur Verbesserung eines Aufprallwinkels und zur Schaffung einer weicheren Aufprallfläche bei vergrößerter Knautschzone in Betracht. Zudem kann eine Auslösung von Gurtstraffern, verschiedenen Airbag-Systemen oder sonstigen aktiven Sicherheitskomponenten auch im Fahrzeuginnenraum für den Fall vorgesehen werden, dass eine Insassengefährdung nicht mehr ausgeschlossen werden kann. Dies ist auch außerhalb des vorstehend genannten Bereiches zwischen 20 bis ca. 50 km/h beispielsweise bei Wild-Unfällen regelmäßig der Fall, da der Schwerpunkt insbesondere bei Rotwild oder Elchen, aber auch bei großen Hunden, Kühen oder Pferden noch oberhalb der Motorhaube liegt. Ein derartiges Tier schlägt daher bei einem Unfall weitgehend ungebremst auf der Windschutzscheibe auf und durchschlägt diese aufgrund seines hohen Eigengewichtes sehr häufig auch.. Hier sind Fahrer sowie ein möglicher Beifahrer extrem gefährdet, so dass hier aktive Schutzmaßnahmen auch für Insassen ergriffen werden müssen.

Ein erfindungsgemäßes Verfahren zeichnet sich also auch in den genannten Weiterbildungen dadurch aus, dass unter Verwendung robuster, überlastungsfester, preisgünstiger und zudem über einen weiten Temperaturbereich sicher einsetzbarer sowie selbstdiagnosefähiger Sensoren eine schnelle und sehr zuverlässige Erkennung von Unfällen mit einem Fußgänger oder Zweiradfahrer geschaffen wird.

Weitere Vorteile der Erfindung werden nachfolgend anhand Ausführungsformen unter Bezugnahme auf die Abbildungen der Zeichnung näher beschrieben. In der Zeichnung zeigen:
- Figur 1:: eine schematische Darstellung eines erfindungsgemäßen Sicherheitssystems an einer Stoßstange eines Kraftfahrzeugs unter Andeutung weiterer Einsatzbereiche in einer Draufsicht;
- Figur 2:: einen möglichen Einsatzbereich der Erfindung in einem besonders vorteilhaften Gesamtzusammenhang eines Sicherheitssystems in Form eines Flussdiagramms;
- Figur 3:: eine schematische Darstellung des Kerns der Erfindung, wie er beispielsweise in Block 19 gemäß Fig. 2 realisiert werden kann;

- Figur 4:: eine schematische Darstellung eines Systems, in dem ein Verfahren gemäß Figur 2 und 3 umgesetzt werden kann.

Nachfolgend werden in den Abbildungen der Figuren einheitlich gleiche Bezugszeichen für gleiche Elemente verwendet.

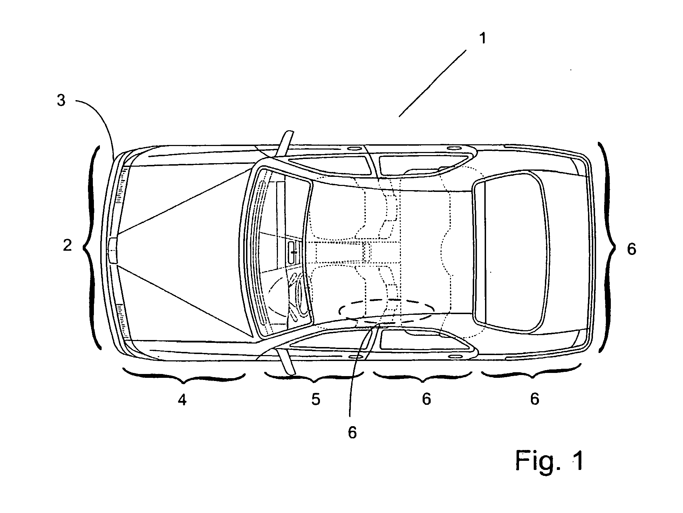

Figur 1 zeigt als schematische Darstellung ein Kraftfahrzeug 1, das mit hier nicht weiter im Detail dargestellten Sensoren 2 eines erfindungsgemäßen Sicherheitssystems in einem Stoßfänger bzw. einer Stoßstange 3 ausgerüstet ist. Bei Unfällen unter Beteiligung eines Fußgängers oder Zweiradfahrers stellt die Stoßstange 3 in der Regel den Punkt dar, an dem ein erster Aufprall stattfindet. Bei einem seitlichen Aufprall kann dieser Erstkontakt auch an einem linken oder rechten Kotflügel 4, oder einer Fahrer- oder Beifahrertür 5 stattfinden. Für eine Hälfte des Kraftfahrzeugs 1 sind durch geschweifte Klammern beispielhaft noch weiterer Einsatzbereiche 6 von Sensoren 2 eines erfindungsgemäßen Sicherheitssystems in der Draufsicht angedeutet worden.

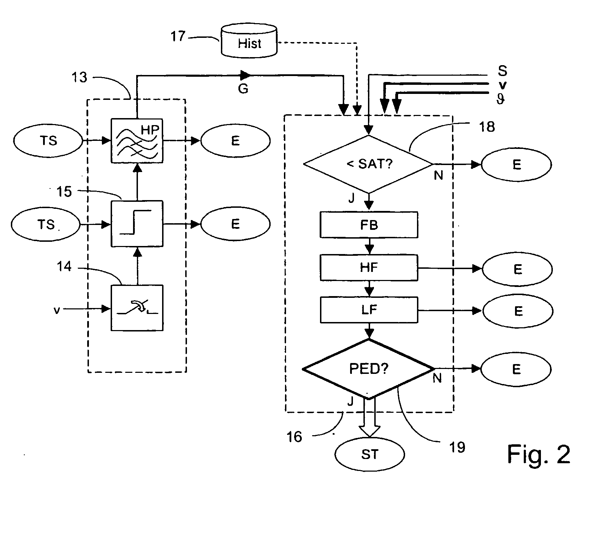

In Figur 2 ist ein Flussdiagramm einer Ausführungsform nach bisher nur intern bekanntem Stand der Technik dargestellt, in dem das erfindungsgemäße Verfahren integriert werden kann. Ein erster Block 13 fasst eine Verarbeitung eines Auslöse-Signals TS dar, das von demjenigen der Sensoren 2 stammt, der durch einen Aufprall als erster ausreichend stark verformt wird. Es wird auch als Trigger-SensorSignal bezeichnet. Voraussetzung für eine Verarbeitung des Auslöse-Signals TS ist jedoch, dass sich das Fahrzeug 1 selber mit einer Geschwindigkeit v von etwa 20 bis ca. 50 km/h bewegt. Andernfalls wird der Geschwindigkeitsschalter 14 nicht geschlossen und das Verfahren wird nicht durchlaufen. Als weitere Voraussetzung ist in Funktionsblock 15 ein Schwellwert für die Intensität des Ausgangssignals eines eventuell von einem Aufprall betroffenen Sensors 2 vorgegeben. Wird dieser Vorgabewert nicht erreicht und/oder überschritten, so ist das Verfahren an dieser Stelle ebenfalls beendet.

Nur dann, wenn die Intensität des Ausgangssignals TS die vorgegebene Intensität übersteigt, findet eine Hochpass-Filterung HP des Signals TS statt. Durch diese Hochpass-Filterung HP wird sichergestellt, dass sehr sanfte Aufschläge, die beispielsweise von einem Anstoßen an Kisten, Papp-Schachteln oder Schaumteilen herrühren können, niederfrequentes Rauschen, elektromagnetische Einkopplungen bei 50 oder 60 Hz, Motorvibrationen bei Motorumdrehungen von ca. 6.000 min⁻¹, sowie relativ zur Stoßstange 3 nicht-frontal verlaufende Aufschläge und dumpfe Schläge von Höckern und/oder Straßenunebenheiten aus Sicht des dargestellten Verfahrens in dem gerade beschriebenen ersten Schritt ausgeblendet und als irrelevante Fälle nicht weiter beachtet werden. Fahrbahn-erregte Fahrzeug-Vibrationen weisen auch in den Fällen von Pflaster, Querrillen, Bahnübergängen und Schlaglöchern im Wesentlichen nur niederfrequente Signalanteile auf, die durch die vorgeschaltete Hochpass-Filterung HP des Signals TS zum Unterbinden einer fehlerhaften Auslösung des Verfahrens ausgefiltert werden. Derartige Anregungen werden zwar im Rahmen des nachfolgend beschriebenen mehrstufigen Analyse- und Bewertungsverfahrens als irrelevant erkannt, die Hochpass-Filterung HP des Signals TS kürzt den Weg zu dieser Erkenntnis jedoch vorteilhaft ab und führt so insgesamt zu einer deutlichen Zeitersparnis, die auch eine uneingeschränkte Verfügbarkeit des Gesamtverfahrens selbst im Fall schnell aufeinander folgender Signale TS garantiert.

Der erste Block 13 schließt somit als erster Schritt des Gesamtverfahrens eine ganze Anzahl möglicher Quellen für eine fehlerhafte oder nicht erforderliche Auslösung von Fußgänger- und/oder Zweiradfahrer-Schutzfunktionen aus. Nur wenn das Fahrzeug sich innerhalb des vorgegebenen Geschwindigkeitsintervalls bewegt, das Signal TS stark genug ist und ausreichend hoch- und höherfrequente Anteile aufweist, wird ein zweiter Block 16 durch ein Signal G als Startsignal für eine detaillierte Analyse und Bewertung im Hinblick auf bestimmte Eigenschaften aktiviert. Dem Block 16 werden dann die Ausgangssignale S aller Sensoren 2 über Einzelleitungen oder über einen Bus zusammen mit einer Angabe einer aktuellen Fahrzeuggeschwindigkeit v sowie der Fahrzeug-Außentemperatur ϑ übermittelt. Zudem können über eine Datenbank 17 Informationen zur Fahrzeug-Historie geladen werden. Damit können dann auch Vorschädigungen bestimmter Teile oder Komponenten des Fahrzeugs 1 nachfolgend berücksichtigt werden.

Im zweiten Funktionsblock 16 wird nun in einem zweiten Schritt in einem Block 18 überprüft, ob sich ein Ausgangssignal S eines der Sensoren 2 in einem Sättigungsbereich befindet. Ein Normalbetrieb jedes Sensors 2 erfolgt deutlich außerhalb seines Sättigungsbereiches. Befindet sich aber mindestens ein Sensor 2 in der Sättigung, so kann sicher vom Aufprall eines Objektes, wie beispielsweise ein Zusammenstoß mit einem anderen Fahrzeug, einer Mauer oder einer sonstigen massiven Barriere, einem stählernen Posten eines Verkehrsleitsystems etc., im Bereich des betreffenden Sensors 2 ausgegangen werden. Im Umkehrschluss kann damit ein Unfall mit einem Fußgänger oder Zweiradfahrer sicher ausgeschlossen werden.

Nun wird in dem Fall, dass keines der Ausgangssignale S der Sensoren 2 im Sättigungsbereich liegt, jedes der Signale S einer Filterbank FB zugeführt. Die Filterbank FB berechnet für vorgegebene Frequenzen oder auch Frequenzfenster in Näherung die Fourier-Koeffizienten der analogen Signale. Es folgt in einem dritten Schritt eine Überprüfung der Signale S auf ihre Hochfrequenzanteile. Werte, die unterhalb des Schwellwertes liegen, kennzeichnen sanfte Schläge an das Fahrzeug 1 im Bereich der Sensoren 2, die beispielsweise von einem Mülleimer oder einem Fußball stammen können. Übersteigt der Hochfrequenzanteil eines Signals S eine vorgegebene Schwelle jedoch, so spricht das für einen Aufprall eines harten Objektes und damit gegen einen Unfall mit einem Fußgänger oder Zweiradfahrer, dessen Körper im Rahmen eines erfindungsgemäßen Verfahrens insgesamt als "weich" gilt.

Anschließend wird eine Untersuchung niedrigerer Frequenzanteile der SensorAusgangssignale S in Form einer Abschätzung niederfrequenter Signalanteile durchgeführt. Hier kennzeichnen Werte unterhalb eines Schwellenwertes einen klirrenden Aufprall, wie er sich durch das Aufschlagen eines Steins oder Schutt ergibt. Damit ist bei niederfrequenten Signalen unterhalb eines Grenzwertes ein Unfall mit einem Fußgänger oder Zweiradfahrer wiederum sehr unwahrscheinlich. Umgekehrt macht eine Überschreitung des vorgegebenen Schwellwertes dieses vierten Verfahrensschrittes einen Zusammenprall mit einem Fußgänger oder Zweiradfahrer sehr wahrscheinlich.

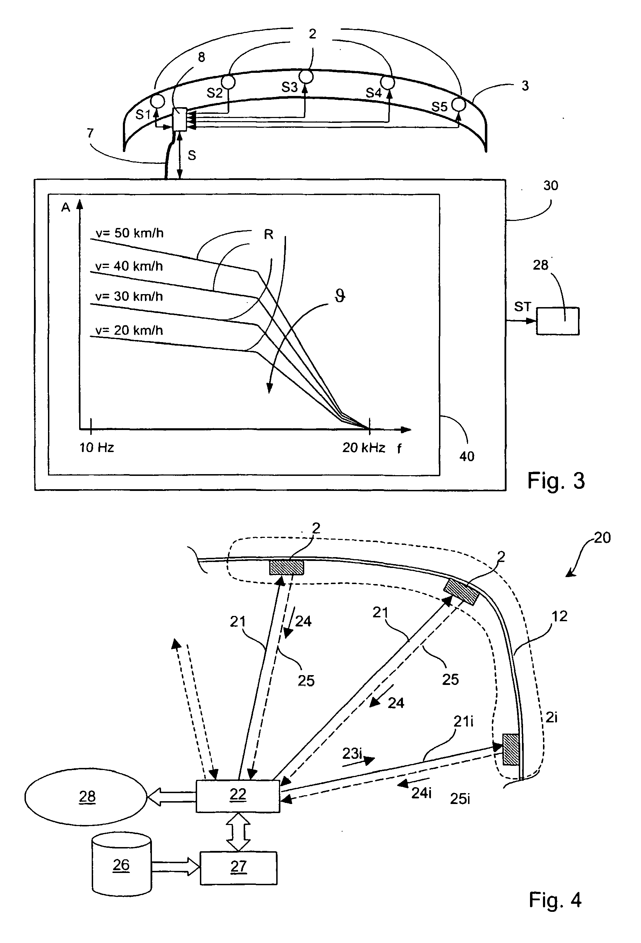

In einem abschließenden fünften Schritt erfolgt nun als Fußgänger-Identifikation noch eine Plausibilitätsprüfung in Funktionsblock 19. Eine derartige Plausibilitätsprüfung umfasst statistische Untersuchungen, die eine Wahrscheinlichkeit eines korrekt erkannten Unfalls mit einem Fußgänger oder Zweiradfahrer noch weiter erhöhen, wozu insbesondere ein Mustervergleich mit herangezogen wird (siehe hierzu auch Fig. 3). Hierin werden Frequenzkomponenten der Signale S mit denjenigen bekannter Fußgänger- Referenzsignale R verglichen, die unter realistischen Bedingungen unter Verwendung von Fußgänger-Modellen oder Attrappen gewonnen wurden. Für jeden Aufschlag wird der Frequenzgehalt mit dem eines oder mehrerer Aufschlag-Objekte verglichen. Der Ausgangswert wird als Wert für die Wahrscheinlichkeit eines Aufpralls eines Fußgängers oder Zweiradfahrers einer Schwellwertuntersuchung mit einem Schwellwert von ca. 0,8 unterzogen.

Eine Beendigung E des beschriebenen Verfahrens ist gemäß der Abbildung von Figur 2 in der Regel nach jedem einzelnen Entscheidungsschritt möglich. Eine abschließende Plausibilitätsprüfung mit Mustervergleich und statistischen Untersuchungen zur Ermittlung eines Wahrscheinlichkeitswertes wird nur dann durchgeführt, wenn die vorangehenden Teilprüfungen der Schritte 1 bis 4 mit Erfolg durchlaufen worden sind. Dadurch wird mit fortschreitender Sicherheit festgestellt, dass ein auf- bzw. anschlagendes Objekt hinsichtlich seiner Steifigkeit beispielsweise einem Bein eines Fußgängers im Wesentlichen ähnlich ist.

Es ergibt sich beim Durchlaufen des dargestellten Verfahrens eine systembedingte Gesamtzeit von nur 8 ms, die sich aus 5 ms Signal-Erfassungszeit und nur 3 ms Signal-Berechnungszeit zusammensetzt. Einen wesentlichen Beitrag zur Zeitersparnis leistet hierbei der Einsatz analoger Schaltkreis-Komponenten. Geht man davon aus, dass ein Erstkontakt mit einem Fußgänger oder Zweiradfahrer im Bereich der Stoßstange 3 erfolgt, so kann als Sicherheitsmaßnahme zur Verletzungsminderung also bereits 8 ms später eine Ansteuerung über ein Steuersignal ST zur Zündung eines außen vorgesehen Airbags und/oder zum Anstellen der Motorhaube etc gegeben werden. Ein Aufschlagen von Kopf und/oder Oberkörper erfolgt laut Abschätzung, z. B. aus der DE 102 06 351 A1 in Figur 10b, erst rund 200 ms nach dem Erstkontakt. Zu diesem Zeitpunkt können bekannte Schutzvorrichtungen durch ein vorstehend beschriebenes Analyseverfahren bereits gezielt ausgewählt, angesteuert und in einen Zustand optimaler Schutzentfaltung für einen Fußgänger oder Zweiradfahrer gebracht worden sein.

Figur 3 zeigt schematisch eine Stoßstange 3 in einer frontalen Ansicht. Hier sind die Sensoren 2 als kreisförmige weiße Flecken zur Veranschaulichung ihrer Anzahl und Verteilung eingezeichnet. Die in diesem Ausführungsbeispiel fünf Sensoren 2 in linienförmiger Anordnung sind in der Realität jedoch nicht sichtbar, nur ein Daten- bzw. Signalkabel 7, die die von den Sensoren 2 abgegebenen Ausgangssignale S1 bis S5 gegebenenfalls unter Zwischenschaltung eines Sammelmoduls 8 übertragen, weist auf ihre Existenz hin.

Die Ausgangssignale S1 bis S5 oder (wie hier dargestellt) das stärkste Ausgangssignal S der Ausgangssignale S1 bis S5 werden bzw. wird einer Auswerteeinheit 30 zugeführt. Diese Auswerteeinheit 30 kann beispielsweise das gesamte Verfahren gemäß Fig. 2 durchführen. Die Auswerteeinheit 30 enthält eine Fußgängererkennungseinheit 40, die beispielsweise dem Block 19 des in Fig. 2 dargestellten Gesamtverfahrens entsprechen kann.

Das Ausgangssignal S1 bis S5 bzw. das Ausgangssignal S werden bzw. wird mit in der Fußgängererkennungseinheit 40 abgelegten Mustern bzw. Referenzkurven R verglichen, wobei die Fahrzeuggeschwindigkeit v und die Fahrzeug-Außentemperatur ϑ als Parameter vorgegeben werden. Auf der Abszisse ist die Frequenz f und auf der Ordinate die Amplitude A aufgetragen. Die Referenzmuster R geben im vorliegenden Beispiel Vergleichsspektren für vier verschiedene Fahrzeuggeschwindigkeiten v vor, die für Zwischenwerte der aktuellen Fahrzeuggeschwindigkeit v interpoliert werden können. Die Vergleichsspektren können jedoch auch für verschiedene Geschwindigkeitsbereiche definiert werden. Die Amplitude A der Referenzkurven R nimmt mit zunehmender Fahrzeuggeschwindigkeit v zu und mit zunehmender Außentemperatur ϑ ab.

Wird eine in definierten Toleranzbereichen liegende Übereinstimmung zwischen Ausgangssignal S und Muster abhängig von der Fahrzeuggeschwindigkeit v und der Fahrzeug-Außentemperatur ϑ erkannt, d. h. wird beispielsweise ein Fußgänger oder Zweiradfahrer mit einer vorgegebenen Wahrscheinlichkeit erkannt, wird ein Steuersignal ST an einen Aktuator 28 beispielsweise zum Anheben der Motorhaube im Zusammenhang mit Maßnahmen zum Fußgängeraufprallschutz ausgegeben.

Figur 4 zeigt eine schematische Darstellung eines Systems 20, in dem ein Verfahren gemäß Figur 2 und 3 umgesetzt ist. Das Sicherheitssystem 20 umfasst eine Vielzahl von Sensoren 2, die an einer nur ausschnittsweise dargestellten Stoßstange 3 des Kraftfahrzeugs 1 angeordnet sind. In dem vorliegenden Fall sind die Sensoren 2 nach außen von einer Außenhaut 12 umgeben und durch eine Verklebung auf dem nicht weiter dargestellten Träger fixiert. Jeder Sensor 2 ist über eine Signalleitung 21 mit einer zentralen Systemeinheit 22 verbunden. Die Signalleitung 21 dient als Zuleitung für ein Diagnosesignal und/oder ein Anregungssignal 23, das durch den jeweiligen Sensor 2 in ein mechanisches Signal gewandelt wird. Hierzu ist der Sensor 2 als reziprok wirkender Wandler ausgebildet, im vorliegenden Fall als piezoelektrischer Wandler. So kann auf die Einleitung eines Anregungssignals 23 an einem bestimmten Sensor 2i hin ein Reaktionssignal 24i über eine Rückleitung 25i dieses Sensors 2i an die zentrale Systemeinheit 22 rückgemeldet werden. Das Reaktionssignal 24i jedes angesteuerten Sensors 2i zeigt, dass der betreffende Sensor 2i elektrisch angesprochen werden konnte und mechanisch reagierte, wobei diese Reaktion wieder elektrisch rückgewandelt werden konnte. Damit dient dieses Reaktionssignal 24i als einfacher Selbsttest. Eine Auswertung des Reaktionssignals 24i gibt zudem weiteren Ausschluss über die Funktionsfähigkeit des betreffenden Sensors 2i. Damit ist jeder der Sensoren 2 nach gleichem TestSchema ohne zusätzliche Vorrichtungen selbst-diagnosefähig. Die zentrale Systemeinheit 22 ist zu einer routinemäßigen Durchführung derartiger Selbsttests für alle Sensoren 2 des Sicherheitssystems 20 sowie zu einer Auswertung der jeweilig erhaltenen Reaktionssignale 24 der jeweils angesteuerten Sensoren 2 ausgebildet.

Die mechanische Systemantwort des Sensors 2 auf das Anregungssignal 23 der zentralen Systemeinheit 22 hin pflanzt sich durch die starre Kopplung des Sensors 2 in Form einer mechanischen Welle fort. Aufgrund der Signalfortpflanzung über den Bereich der Einleitung hinweg werden auch weitere Reaktionssignale 24 der übrigen Sensoren 2 über die jeweiligen Rückleitungen 25 an die zentrale Systemeinheit 22 gemeldet.

Durch die Verteilung einer Vielzahl von Sensoren 2 über den hier nur exemplarisch dargestellten Bereich verfügt das dargestellte Sicherheitssystem 20 jedoch noch über erweiterte Detektions- und Analysefähigkeiten: Jeder der Sensoren 2 verfügt über eine eigene Signalleitung 21 sowie eine eigene Rückleitung 25. Damit sind die jeweiligen Anregungssignale 23 gezielt einsetzbar und die Reaktionssignale 24 sind einem jeweiligen Sensor 2 und damit verbunden einer bestimmten Position eindeutig zuordenbar. Jeder Piezo-Sensor 2 ist für sich betrachtet selbstdiagnosefähig, so dass auch das Sicherheitssystem 20 als Ganzes selbstdiagnosefähig ist, da es flexibel erweiterbar als Netzwerk auf den robusten und preiswerten Piezo-SensorElementen 2 als Basisbausteinen aufgebaut ist.

Auf die Aussendung eines Anregungssignals 23 durch die zentrale Systemeinheit 22 an einen Sensor 2i versenden alle Sensoren 2 jeweilig eigene Reaktionssignale 24 über die zugeordneten Rückleitungen 25 an die zentrale Systemeinheit 22. Damit ist neben einer Überwachung einer Einsatzbereitschaft der piezoelektrischen Sensoren 2 als Fehlanalyse auch eine generelle Überwachung der mechanischen Eigenschaften eines zu überwachenden Bauteils sowie einer Schadenskontrolle durch eine Auswertung der Reaktionssignale 24 in der zentralen Systemeinheit 22 möglich. Hierzu ist die zentrale Systemeinheit 22 mit einer Datenbank 26 sowie einem Modell 27 eines jeweiligen Überwachungsbereiches verbunden. In der Datenbank 26 sind hier die bei störungsfreiem Betrieb und intaktem Zustand aufgenommenen Charakteristika von Reaktionssignalen 24 der jeweiligen Sensoren 2 in Abhängigkeit eines jeden Sensors 2 als anregendem Aktuator aufgeführt. In dem Modell 27 sind die Verteilungen der jeweiligen Sensoren 2 über den Überwachungsbereich hinterlegt. Unter Zusammenschaltung der zentralen Systemeinheit 22 mit der Datenbank 26 sowie dem Modell 27 können nun Abweichungen von einem Regelverhalten für jeden der Sensoren 2 festgestellt und auf der Basis des Modells 27 einem oder mehreren Abschnitten des Überwachungsbereiches, zugeordnet werden. Eine Anhaftung, aber erst recht eine kleinere Beule, verändern die mechanischen Schwingungseigenschaften bereits signifikant. Damit können diese Veränderungen nun durch Vergleiche mit einer störungsfreien Systemantwort verglichen werden, so dass im Ergebnis Bereiche mit Anhaftungen oder gar Vorschädigungen gezielt erkannt und angezeigt werden können. Das ist von Bedeutung, da Anhaftungen von Eis, Schnee oder Schlammanbackungen etc. Betriebsstörungen verursachen können. Untersuchungen der genannten Art werden selbstverständlich auch auf weitere mechanisch tragende Elemente und Verbindungen des Chassis ausgeweitet.

Die Sensoren 2 sind in einer alternativen und hier nicht weiter dargestellten Ausführungsform einzeln oder in Gruppen so ausgebildet, dass sie direkt an Busleitungen eines einheitlichen Bussystems angeschlossen werden können. Dadurch wird der interne Verdrahtungsaufwand in jeder Gruppe noch weiter reduziert, wobei die Systemarchitektur noch besser überschaubar wird.

Die vorstehend beschriebenen Verfahren zum Betreiben eines oder mehrerer Sensoren in einem Sicherheitssystem bauen auf einer gezielten mechanischen Anregung auf, die systemintern durch die zentrale Systemeinheit 22 ausgelöst werden. Hierdurch werden statische Störungen im Sinne einer Sicherheitsüberprüfung detektiert. Dazu ist es also insbesondere nicht erforderlich, dass eine Funktionsbeeinträchtigung oder sonstige Störung selber schallemittierend ablaufen. Auch zur Erkennung und Analyse bei dynamischer und/oder nicht harmonischer äußerer Anregungen kann das vorstehend beschriebene System 20 Verwendung finden. Derartige externe Schwingungserregungen werden u.a. durch Verformungen von Teilen verursacht und strahlen in einen Überwachungsbereich hinein, falls sie nicht innerhalb des Überwachungsbereichs ablaufen. Sie liefern durch die Art ihrer Ausbreitung sowie ein jeweiliges Frequenzmuster starke Indizien für Störungen, die durch Fremdberührung hervorgerufen werden. Vorstehend wurde bereits auf Beispiele für solche Fremdberührungen in Form unfallbedingter Kontakte mit einem Fußgänger oder Fahrradfahrer oder Crashs im Zusammenhang mit einem Fahrzeugzusammenstoß eingegangen.

## Patentansprüche

1. Verfahren zum Ansteuern eines Sicherheitssystems in einem Fahrzeug (1), wobei ein Ausgangssignal (S) mindestens eines Aufprallsensors (2; S1, S2, S3, S4, S5) in einer Auswerteeinheit (30), die in einem elektronischen Steuergerät integriert ist, einer Frequenzanalyse unterzogen wird, **dadurch gekennzeichnet, dass** die Frequenzanalyse in mindestens einem vorgegebenen Frequenzbereich durchgeführt wird, dass das Spektrum des Ausgangssignals (S) mit Referenzmustern (R) verglichen wird, dass dabei die Abhängigkeit des Spektrums von der aktuellen Fahrzeuggeschwindigkeit (v) und/oder von der aktuellen Fahrzeug-Außentemperatur (ϑ) berücksichtigt wird und dass vom Steuergerät ein Ansteuersignal (ST) zum Auslösen von vorgesehenen Schutzmaßnahmen ausgegeben wird, wenn eine in definierten Toleranzbereichen liegende Übereinstimmung zwischen Ausgangssignal (S) und einem Referenzmuster (R) abhängig von der aktuellen Fahrzeuggeschwindigkeit (v) und/oder von der aktuellen Fahrzeug-Außentemperatur (ϑ) erkannt wird.

2. Verfahren nach Patentanspruch 1, **dadurch gekennzeichnet, dass** unter Ausnutzung reziprok wirkender Substanzen als Körper der Sensoren zyklische Funktions- bzw. Selbsttests **dadurch** durchgeführt werden, dass ein Sensor als Aktuator zur Anregung des mechanischen Systems verwendet und Reaktionssignale ausgewertet werden, insbesondere unter Berücksichtigung einer Historie mit unfallbedingten Vorschädigungen bestimmter Bereiche und/oder Elemente.

3. Vorrichtung zum Ansteuern eines Sicherheitssystems in einem Fahrzeug (1), die mindestens einen Sensor (2; S1, S2, S3, S4, S5) umfasst, wobei der Ausgang des Sensors (2) zur Zuführung von Ausgangssignalen (S) mit einer Auswerteeinheit (30) verbunden ist, die bezüglich der Ausgangssignale (S) eine Frequenzanalyse durchführt und die in einem Steuergerät integriert ist, **dadurch gekennzeichnet,**
**dass** die Auswerteeinheit (30) bzw. das Steuergerät derart ausgebildet ist, dass die Frequenzanalyse in mindestens einem vorgegebenen Frequenzbereich durchführbar ist, dass das Spektrum des Ausgangssignals S mit Referenzmustern vergleichbar ist, dass dabei die Abhängigkeit des Spektrums von der aktuellen Fahrzeuggeschwindigkeit (v) und/oder von der aktuellen Fahrzeug-Außentemperatur (ϑ) berücksichtigt wird und dass vom Steuergerät ein Ansteuersignal (ST) zum Auslösen von vorgesehenen Schutzmaßnahmen ausgebbar ist, wenn eine in definierten Toleranzbereichen liegende Übereinstimmung zwischen Ausgangssignal (S) und einem Referenzmuster (R) abhängig von der aktuellen Fahrzeuggeschwindigkeit (v) und/oder von der aktuellen Fahrzeug-Außentemperatur (ϑ) erkannt wird.

4. Vorrichtung nach Patentanspruch 3, **dadurch gekennzeichnet, dass** die Auswerteeinheit (30) bzw. das Steuergerät auch derart ausgebildet ist, dass unter Ausnutzung reziprok wirkender Substanzen als Körper der Sensoren zyklische Funktions- bzw. Selbsttests **dadurch** durchführbar sind, dass ein Sensor als Aktuator zur Anregung des mechanischen Systems verwendet und Reaktionssignale ausgewertet werden, insbesondere unter Berücksichtigung einer Historie mit unfallbedingten Vorschädigungen bestimmter Bereiche und/oder Elemente.

5. Vorrichtung nach einem der Patentansprüche 3 oder 4, **dadurch gekennzeichnet, dass** die Vorrichtung ein Netzwerk von Sensoren (2) umfasst, die über einen Beobachtungsbereich verteilt angeordnet und jeweils über eigene getrennte Signalleitungen (21) und Rückleitungen (25) mit der zentralen Systemeinheit (22) verbunden sind und vorzugsweise in Gruppen zusammengefasst sind.

## Claims

1. A method of actuating a safety system in a vehicle (1), wherein an output signal (S) from at least one impact or collision sensor (2; S1, S2, S3, S4, S5) is subjected to frequency analysis in an evaluating unit (30) incorporated in an electronic control unit, **characterised in that** the frequency analysis is performed in at least one specified frequency range, the spectrum of the output signal (S) is compared with reference patterns (R), the dependence of the spectrum on the instantaneous speed (v) and/or the instantaneous temperature (θ) outside the vehicle is taken into account and the control unit issues a signal (ST) for triggering planned protective steps if a coincidence within defined tolerance ranges is recognised between the output signal (S) and a reference pattern (R) depending on the instantaneous speed (v) and/or the instantaneous temperature (θ) outside the vehicle.

2. A method according to claim 1, **characterised in that**, using reciprocally acting substances as the body of the sensors, cyclic functional or automatic tests are made **in that** an actuator in the form of a sensor is used for exciting the mechanical system and reaction signals are evaluated, especially with allowance for a history containing previous damage due to accidental collision with certain regions and/or elements.

3. A device for actuating a safety system in a vehicle (1) comprising at least one sensor (2; S1, S2, S3, S4, S5), wherein the output of the sensor (2) is connected for supplying output signals (S) to an evaluating unit (30) which makes a frequency analysis with regard to the output signals (S) and is incorporated in a control unit, **characterised in that** the evaluating unit (30) or the control unit is constructed so that the frequency analysis is performed in at least one specified frequency range, the spectrum of the output signal (S) is compared with reference patterns (R), the dependence of the spectrum on the instantaneous speed (v) and/or the instantaneous temperature (θ) outside the vehicle is taken into account and the control unit issues a signal (ST) for triggering planned protective steps if an agreement within defined tolerance ranges is recognised between the output signal (S) and a reference pattern (R) depending on the instantaneous speed (v) and/or the temperature (θ) outside the vehicle.

4. A device according to claim 3, **characterised in that** the evaluating unit (30) or control unit is also constructed so that using reciprocally acting substances as the body of the sensors, cyclic functional or automatic tests are made **in that** an actuator in the form of a sensor is used for exciting the mechanical system and reaction signals are evaluated, especially with allowance for a history containing previous damage due to accidental collision with certain regions and/or elements.

5. A device according to claim 3 or 4, **characterised in that** the device comprises a network of sensors (2) distributed over an observation region and each connected by individual separate signal lines (21) and return lines (25) to the central system unit (22) and preferably combined in groups.

## Revendications

1. Procédé de commande d'un système de sécurité d'un véhicule (1) selon lequel on soumet à une analyse de fréquence un signal de sortie (S) d'au moins un capteur de collision (2 ; S1, S2, S3, S4, S5) d'une unité d'exploitation (30) intégrée à un appareil de commande électronique,
**caractérisé en ce qu'**
on effectue l'analyse de fréquence dans au moins une plage de fréquence prédéfinie,
on compare le spectre du signal de sortie (S) au motif de référence (R),
on tient compte de la relation entre le spectre de fréquence et la vitesse de déplacement actuelle (v) et/ou la température extérieure actuelle (θ) du véhicule, et
l'appareil de commande émet un signal de commande (ST) pour déclencher des mesures de protection prédéfinies si une concordance est reconnue dans une plage de tolérance définie entre le signal de sortie (S) et un motif de référence (R) en fonction de la vitesse actuelle (v) du véhicule et/ou de la température extérieure (θ) actuelle du véhicule.

2. Procédé selon la revendication 1,
**caractérisé en ce qu'**
en utilisant des substances à effet réciproque comme organes pour les capteurs, on effectue des tests autonomes ou des tests fonctionnels cycliques en utilisant un capteur pour exciter le système mécanique et on exploite les signaux de réaction notamment en tenant compte de l'historique et des zones et/ou des éléments déterminés, déjà endommagés par un incident.

3. Dispositif de commande d'un système de sécurité d'un véhicule (1) comportant au moins un capteur (2 ; S1, S2, S3, S4, S5), la sortie du capteur (2) étant utilisée pour fournir des signaux de sortie (S) à une unité d'exploitation (30) qui effectue une analyse de fréquence sur les signaux de sortie (S), cette unité étant intégrée dans un appareil de
commande,
**caractérisé en ce qu'**
on réalise l'unité d'exploitation (30) ou l'appareil de commande sont réalisés pour effectuer l'analyse de fréquence dans au moins une plage de fréquence prédéfinie, le spectre du signal de sortie (S) étant comparé à un motif de référence,
on tient compte de la relation entre le spectre et la vitesse actuelle (v) du véhicule et/ou la température extérieure actuelle (θ) du véhicule, et
l'appareil de commande émet un signal de commande (ST) pour déclencher des mesures de protection prédéfinies si l'on détecte une concordance comprise dans une plage de tolérance définie entre le signal de sortie (S) et un motif de référence (R) selon la vitesse actuelle (v) et/ou la température extérieure actuelle (θ) du véhicule.

4. Dispositif selon la revendication 3,
**caractérisé en ce que**
l'unité d'exploitation (30) ou l'appareil de commande sont réalisés pour qu'en utilisant des substances à effet réciproque comme corps des capteurs on effectue ainsi des tests autonomes ou fonctionnels cycliques, et on utilise un capteur comme actionneur servant à exciter le système mécanique, les signaux de réaction étant exploités notamment en tenant compte d'un historique avec les zones et/ou les éléments déterminés, pré-endommagés par suite d'accident.

5. Dispositif selon l'une des revendications 3 à 4,
**caractérisé en ce qu'**
il comprend un réseau de capteurs (2) répartis dans une plage d'observation et reliés chaque fois par des lignes de signaux propres, distincts (21) et des lignes de retour de signaux (25) à l'unité centrale (22) du système en étant de préférence réunis en groupe.
